# EUROPÄISCHE PATENTSCHRIFT

(11) **EP 1 880 039 B1**
(45) Veröffentlichungstag und Bekanntmachung des Hinweises auf die Patenterteilung: **26.11.2014**
(21) Anmeldenummer: 06753525.2
(22) Anmeldetag: 09.05.2006
(51) Int. Cl.: B23K 35/02, B23K 35/30, C23D 5/02

(54) **FLÜSSIGAUFTRAGBARE EINBRENNBESCHICHTUNG**
ENAMEL COATING FOR LIQUID APPLICATION
REVETEMENT AU FOUR POUVANT ETRE APPLIQUE SOUS FORME LIQUIDE

(30) Priorität: 10.05.2005 DE 102005022264
(43) Veröffentlichungstag der Anmeldung: 23.01.2008
(73) Patentinhaber: Fachhochschule Münster, 48149 Münster (DE)
(72) Erfinder: PETERSEIM, Jürgen, 48565 Steinfurt (DE)
(74) Vertreter: Braun-Dullaeus, Karl-Ulrich
(86) Internationale Anmeldenummer: PCT/EP2006/004323
(87) Internationale Veröffentlichungsnummer: WO 2006/119962

(56) Entgegenhaltungen:
- EP-A- 0 013 906
- WO-A-92/21785
- WO-A-99/00534
- US-A- 4 971 856
- DATABASE WPI Section Ch, Week 199720 Derwent Publications Ltd., London, GB; Class M13, AN 1997-213577 XP002396739 & CN 1 097 816 A (TIELING VALVE FACTORY LIAONING PROV) 25. Januar 1995 (1995-01-25)

## Beschreibung

Die vorliegende Erfindung betrifft ein Verfahren zur Beschichtung von insbesondere aus Metall gefertigten Gegenständen, wie Werkstücken oder Maschinenteilen, mit einer metallischen Einschmelzlegierung. Die Erfindung betrifft außerdem derart beschichtete Gegenstände.

Insbesondere Maschinenbauteile, die besonderen tribologischen Bedingungen ausgesetzt werden, unterliegen im Einsatz einem besonderen Verschleiß, der ihre Lebensdauer stark begrenzt. Um die Verschleißfestigkeit zu erhöhen, bieten sich auftragende Beschichtungen der Oberflächen an, falls eine einfache Härtung der Oberflächen durch Einsatzhärten, Nitrieren oder Borieren nicht ausreicht. Bei der auftragenden Beschichtung werden bekanntermaßen unterschiedliche Werkstoffe in entsprechend unterschiedlichen Verfahren verarbeitet, wobei sich die jeweiligen Beschichtungen auch durch ihre entsprechend unterschiedlichen Eigenschaften auszeichnen. Dabei kommen für solche verschleißhemmenden Beschichtungen mehrere in der Oberflächentechnik bekannte Verfahren in Betracht: Zu nennen sind hier insbesondere das thermische Spritzen, die Laserstrahlbeschichtung, das galvanische Beschichten und das Auftragungsschweißen. Mit jedem dieser Verfahren ist eine Beschichtung von hinreichender Schichtdicke und daher von ausreichender Abtragsreserve möglich, wobei eine möglichst geringe Rauhigkeit oder Welligkeit der Oberfläche angestrebt wird.

Allerdings unterscheiden sich diese Verfahren stark in ihrem Anlagenaufwand, dem Spektrum der verarbeitbaren Werkstoffe und damit letztendlich in den Eigenschaften der Beschichtung. So liegt der Nachteil des Laserbeschichtens in der aufwendigen Anlagentechnik, wobei im Falle des thermischen Spritzens erhebliche Nachteile aus der schlechten Zugänglichkeit und damit der reduzierten Geometrieauswahl der Gegenstände resultieren. Bekanntermaßen bereiten Hinterschneidungen der zu beschichtenden Gegenstände meist unüberwindbare Probleme für diese Beschichtungsverfahren. Die galvanische Beschichtung wird hingegen durch die geringe mögliche Schichtdicke und die Werkstoffauswahl beschränkt. Im Falle des Auftragsschweißens ist die Oberflächenrauheit verhältnismäßig groß, was in vielen Fällen nicht erwünscht ist.

Aus der WO 99/00534 A1 ist ein Verfahren zum Erzeugen einer Hartschicht auf Presstempeln und Pegel für die Herstellung von Hohlglas bekannt. Für die Einschmelzlegigierung wird ein Kunststoffbinder verwendet.

Der WO 92/21785 A2 ist eine verschleißfeste Schicht auf einem einer hohen Verschleißbelastung ausgesetzten Bauteil zu entnehmen, deren Werkstoffgemisch ein nichtmetallisches oxidlösendes Flussmittel und einem Binder aus Polymersalzen der Methacrylate und PU-Harze aufweisen.

Die EP 0 013 906 A1 offenbart einen beschichteten Metallgegenstand, wobei die Beschichtung aus einer das Metallsubstrat benetzenden, temperaturbeständigen Alkaliborosilikat-Glasur-Matrix, die Aluminium-Kupfer-Legierungspulver mit 50 bis 70 Gewichtsprozent Kupfer enthält. Ein Einbrennschlicker wird auf metallische Werkstoffe durch Tauchen oder Spritzen aufgebracht, getrocknet und bei Temperaturen von 760 bis 900 Grad eingebrannt.

Die Aufgabe der Erfindung liegt nun darin, ein alternatives, mit einfachen Mitteln kostengünstig umzusetzendes Verfahren zu schaffen, mit dem sich Gegenstände auch komplexer Geometrie schnell und massenweise mit einer NiCrBSi-Schicht beschichten lassen.

Diese Aufgaben werden durch das Verfahren mit den Merkmalen des Anspruchs 1 gelöst. Besonders vorteilhafte Ausführungsformen sind in den jeweiligen Unteransprüchen genannt.

Wie aus den Ansprüchen ersichtlich, liegt der Grundgedanke der Erfindung letztendlich darin, eine an sich als NiCrBSi-Pulver vorliegende Einschmelzlegierung in einen bei Verarbeitungstemperatur fließ- bzw. streichfähigen Zustand zu bringen, in welchem sie -zumindest für eine gewisse Zeit- auf dem zu beschichtenden Gegenstand haftet. Dazu wird das Pulver mit einem Bindemittel versetzt und, falls das Bindemittel nicht schon eine Verflüssigung erbracht hat, unter Zugabe einer Flüssigkeit zu einem Einschmelzschlicker der gewünschten Viskosität vermischt. Dabei kann sich die Viskosität je nach dem einzusetzenden Auftragungsverfahren und entsprechend der Haftungseigenschaften in einem Bereich zwischen mehr oder weniger flüssig und pastös befinden. Dieser Einschmelzschlicker kann dann mit einem einfachen Verfahren, beispielsweise in einem Tauchbad oder mit einem Streich- oder Spritzprozess, bei gemäßigten Temperaturen, insbesondere bei Raumtemperatur unter 50°C, auf den Gegenstand aufgebracht werden. Der mit dem Einschmelzschlicker versehene Gegenstand wird nachfolgend hohen Temperaturen über 1000°C ausgesetzt, die das Einschmelzen der Einschmelzlegierung ermöglichen. Mit dem Verfahren können verschiedenartige Gegenstände, wie Werkstücke oder Maschinenbauteile, beschichtet werden, wobei Gegenstände aus Metall besonders bevorzugt und Gegenstände aus Keramik nicht ausgeschlossen sind.

Ein ganz wesentlicher Vorteil der Erfindung liegt zunächst darin, dass der Schichtauftrag durch einfache Auftragsverfahren wie Tauchen, Streichen oder Handspritzen mit Hilfe von Druckluft, erfolgen kann. Mit einer dieser Methoden wird der Schlicker in gewisser Stärke auf den Gegenstand aufgebracht, wobei auch Stärken von mehr als 0,5 mm möglich sind. Nach dem Schichtauftrag folgt der Einbrennvorgang. Da der Schichtwerkstoff als einfach zu verarbeitender Schlicker aufgetragen wird, kann auf die oben genannten aufwendigen Beschichtungsanlagen verzichtet werden, was mit einer erheblichen Kostenersparnis einhergeht. Mit dem Verfahren können Schichten einer hohen Härte von über 60 HRC und Schichtdicken von unter 100 µm bis über 1 mm hergestellt werden. Die auf diese Art beschichteten Oberflächen haben einen hohen Widerstand gegenüber abrasiver Beanspruchung und trotzdem eine ausreichende Duktilität. Zudem weisen die Oberflächen eine erhöhte Korrosionsbeständigkeit auf.

Falls der Einschmelzschlicker mittels eines Tauchprozesses auf den Gegenstand aufgebracht wird, kann das in einem oder mehreren Tauchschritten erfolgen, wobei über die Anzahl der Tauchschritte die Dicke des aufgetragenen Schlickers kontrolliert werden kann. Ein weiterer Vorteil der Erfindung liegt darin, dass der Einschmelzschlicker bei Temperaturen unterhalb 100°C, insbesondere auch bei Raumtemperatur, auf den Gegenstand aufgebracht werden kann.

Ein weiterer großer Vorteil liegt darin, dass der Schlicker schon beim Auftrag aber spätestens beim Erhitzen die gesamte Oberfläche des Gegenstandes benetzt, so dass auch geometrisch schwierige Bauteile mit Hinterschneidungen beschichtbar sind. Dabei kann der Schlicker so konzipiert werden, dass er sich spätestens beim Erwärmen über die gesamte Oberfläche verteilt und auf dieser bis zum Erstarren der Legierung haftet. Dabei wird die Viskosität des Einschmelzschlickers durch Zugabe der Flüssigkeit an die jeweils vorliegenden Erfordernisse angepasst, damit er während der Bearbeitung nicht völlig von dem zu beschichtenden Werkstück abtropft. Als Flüssigkeit kann im Prinzip jede Substanz eingesetzt werden, mit der die Komponenten im wesentlichen eine Suspension ausbilden. Für diesen Zweck sind beispielsweise Alkohole und vor allem Wasser geeignet, wobei Wasser wegen des geringen Kostenaufwandes von besonderem Vorteil ist.

Die Erfindung bezieht sich auch auf eine Zusammensetzung, die insbesondere zur Einbrennbeschichtung metallischer Gegenstände geeignet ist. Diese umfasst als Komponenten zunächst eine als NiCrBSi-Pulver vorliegende metallische Einschmelzlegierung und ein Bindemittel, das je nach Art des Bindemittels zu der Gesamtmasse einen Anteil von mehr als 1% oder von mehr als 5%, insbesondere von mehr als 10%, und höchstens von 50%, beiträgt. Bei diesen NiCrBSi Legierungen beginnt die Sinterung, bei denen sich eine stabile Struktur ausbildet, bei Temperaturen über 500° C. Oberhalb dieser Temperatur bildet die NiCrBSi Legierung ein zähfließendes Lot aus. Aus dem angegebenen Temperaturbereich von über 500° C ergibt sich als wesentliche Anforderung an das Bindemittel, dass es bis in diesen Temperaturbereich ebenfalls beständig ist.

Das Bindemittel ist mit der Einschmelzlegierung gut mischbar und ist bei Temperaturen über 400°C, insbesondere bis zu etwa 600°C, stabil. Dabei sind es die vorrangigen Eigenschaften des Bindemittels, dass es die Partikel der Einschmelzlegierung untereinander bindet und dass es die Partikel der Einschmelzlegierung an die Oberfläche des Gegenstandes während der Auftragung und bis zu Temperaturen, bei denen die Einschmelzlegierung eine stabile Schicht bildet, bindet. Somit dient das Bindemittel im wesentlichen dazu, eine anfängliche Haftung zwischen den Metallpulverpartikeln untereinander und zum Substrat auch auf schrägen Flächen zu gewährleisten. Wie dargelegt, muss das Bindemittel eine thermische Beständigkeit bis in einen Temperaturbereich aufweisen, in dem die Bindungs- und Haftungsprozesse der Metallpulverpartikel einsetzen, was bei etwa 600 °C der Fall ist.

Eine weitere Anforderung ist, dass das Bindemittel im eingeschmolzenen Zustand die Kristallstruktur der Einschmelzlegierung nicht signifikant oder gar negativ beeinflusst. So darf das Bindemittel in der fertig eingebrannten Beschichtung entweder nicht mehr vorhanden sein oder in einer solchen Menge und Verteilung vorliegen, dass es die gewünschten Eigenschaften der Beschichtung nicht negativ beeinflusst. Dabei kann es allerdings wünschenswert sein, wenn das Bindemittel mit dem Metall reagiert und die gewünschten Eigenschaften der Beschichtung verstärkt. Das Bindemittel kann auch eine Zusammensetzung aus mehreren Komponenten sein, die gemeinsam zu der gewünschten Charakteristik beitragen. Als Bindemittel oder als Komponenten des Bindemittels bieten sich insbesondere zwei Substanzen an:
So wird erfindungsgemäß eine in Pulverform vorliegende Emaille als Bindemittel verwendet, wobei die Herstellung von Emaille, die in der Rohmasse als sogenannte Fritte vorliegt, seit langer Zeit bekannt ist. Als Zutat für die erfindungsgemäße Zusammensetzung wird die Fritte zu einem Pulver mit einer Korngröße etwa zwischen Mehl und Zucker vermahlen. Versuche haben gezeigt, dass sich Emaille ganz besonders als Bindemittel für die Zusammensetzung eignet. Emaille wird vorteilhafterweise mit einem Masseanteil von etwa 5% und mehr verwendet.

Alternativ werden erfindungsgemäß als Bindemittel anorganische Klebstoffe verwendet, die bis über 500°C insbesondere bis etwa 600°C temperaturbeständig sind und insbesondere zu einem Pulver vermalen werden, bevor sie mit den Partikeln der Einschmelzlegierung vermischt werden. Solche Klebstoffe können auch in flüssiger Form vorliegen, die direkt mit der Einschmelzlegierung versetzt werden kann. Diese Kleber werden vorteilhafterweise mit einem Masseanteil von etwa 2% und mehr verwendet.

Aufgrund dieser Anforderungen wird als Bindemittel eine Emaille verwendet, die, als eigenständige Schicht, etliche der geforderten Eigenschaften aufweist. Bei entsprechender Zusammensetzung der Mischung kann ein glatter Überzug mit metallurgischer Haftung zum Grundmaterial und hoher Härte eingestellt werden.

Die aufgetragene Beschichtung besitzt einen metallurgischen Verbund von hoher Haftfestigkeit zum Grundwerkstoff. Die Vorteile der Beschichtung können vor allem von den Anwendern genutzt werden, die harte verschleißbeständige Beschichtungen in Dickschicht mit einer Abtragsreserve und keine Dünnschichten benötigen.

Eine generelle Anforderung an die Zusammensetzung ist, dass sie spätestens unter Zugabe von Flüssigkeit einen Schlicker ausbildet, in welchem die einzelnen Komponenten nebeneinander im wesentlichen in einer Suspension vorliegen, ohne dass ungewollte chemische Reaktionen ablaufen. In einer vorteilhaften Ausführungsform werden der Zusammensetzung noch weitere Partikel, wie Keramik- oder Hartmetallpartikel, zugegeben, welche die Beschaffenheit und die Charakteristik der beschichteten Oberfläche modifizieren.

Nachfolgend wird die Erfindung anhand zweier typischer Ausführungsbeispiele näher erklärt:
In einer ersten Ausführungsform wird ein Metallpulver bestehend aus einer Legierung des Systems NiCrBSi mit Emaillepulver vermischt und mit Wasser zu einem Schlicker verrührt. Die beiden Pulver stehen dabei in einem Mischungsverhältnis von 75 Massen-% Metallpulver zu 25 Massen-% Emaillepulver. Das Wasser wird nach Notwendigkeit zugegeben. Der Schlicker wird in einer Dicke von 1 mm auf das Stahlbauteil aufgetragen und bei einer Temperatur ab 1025°C eingeschmolzen. Die entstehende Schicht besitzt eine Härte von 620 HV5. Als Emaille wird die Fritte Wendel MW7526 verwendet.

In einer weiteren Ausführung wird Metallpulver bestehend aus einer Legierung des Systems NiCrBSi mit einem Kleber, der insbesondere in Pulverform vorhanden ist, vermischt und mit Wasser laut Angabe des Klebstoffherstellers zu einem Schlicker verrührt. Die beiden Pulver können dabei in einem Mischungsverhältnis von 95 Massen-% des Metallpulvers zu 5 Massen-% des Klebers stehen. Der Schlicker wird in einer Dicke von 1 mm auf das Stahlbauteil aufgetragen und nachfolgend bei einer Temperatur von mehr als 1025°C eingeschmolzen. Die entstehende Schicht besitzt eine Härte von mehr als 680 HV5. Als Kleber kann der Typ Panacol™, Cerastil™ C7 verwendet werden.

Als Metalllegierungen können die üblichen zum Flammspritzen verwendeten Einschmelzegierungen verwendet werden. Eine Übersicht der typischen Zusammensetzungen mit ihren Einschmelztemperaturen ergibt sich aus der nachfolgenden Tabelle (nach Simon/Thoma; Angewandte Oberflächentechnik für metallische Werkstoffe; Carl Hanser-Verlag, München, Wien, 1989), wobei nicht sämtliche der aufgeführten Zusammensetzungen im Rahmen des beanspruchten Verfahrens Verwendung finden.

| **Cr** | **Fe** | **Co** | **Ni** | **W** | **B** | **C** | **Si** | **Schmelzbereich (°C)** |
|---|---|---|---|---|---|---|---|---|
| - | 0,4 | - | Rest | - | 2,5 | - | 3,3 | 1050 - 1175 |
| 9,0 | 3,5 | - | Rest | - | 2,5 | 0,3 | 3,5 | 1050 - 1120 |
| 10,0 | **-** | - | Rest | - | 3,2 | 0,6 | 4,0 | ∼ 1050 |
| 11,0 | 4,0 | - | Rest | - | 2,0 | - | 3,0 | ∼ 1200 |
| 14,0 | 4,0 | - | Rest | - | 2,75 | 0,6 | 3,5 | ∼ 1060 |
| 26,0 | 1,0 | - | Rest | - | 3,5 | 0,95 | 4,0 | ∼ 1050 |
| | | | | | | | | |
| 26,0 | - | Rest | - | 5 | - | 1 | - | 1285 - 1395 |
| 31,0 | - | Rest | - | 14 | - | 1 | - | 1260 - 1330 |
| 29,0 | - | Rest | - | 9 | - | 1,8 | - | 1280 - 1315 |
| 33 | - | Rest | - | 13 | - | 2,5 | - | 1255 - 1290 |
| 34 | - | Rest | - | 19 | - | 2 | - | 1150 - 1190 |
| 27 | 2 | Rest | - | 14 | 2 | 2,6 | 1 | ∼ 1070 |
| 19 | - | Rest | 123 | 13 | 2,5 | 1 | 3 | 1069 - 1180 |

## Patentansprüche

1. Verfahren zur Beschichtung von Gegenständen mit einer metallischen Einschmelzlegierung,
wobei die Einschmelzlegierung als NiCrBSi-Pulver vorliegt und mit einem Bindemittel versetzt wird und mit einer Flüssigkeit zu einem flüssigen oder pastösen Einschmelzschlicker vermischt wird,
wobei das Bindemittel eine Temperaturbeständigkeit von mehr als 400°C aufweist,
wobei der Einschmelzschlicker auf den Gegenstand aufgebracht wird und der mit dem Einschmelzschlicker versehene Gegenstand einer im Schmelzbereich der Einschmelzlegierung liegenden Temperatur von mehr als 1000°C ausgesetzt wird, so dass die Einschmelzlegierung eingeschmolzen wird,
**dadurch gekennzeichnet,**
**dass** als Bindemittel ein Emaillepulver oder ein anorganischer Kleber verwendet wird.

2. Verfahren nach Anspruch 1,
**dadurch gekennzeichnet,**
als Flüssigkeit Wasser verwendet wird.

3. Verfahren nach einem der vorherigen Ansprüche ,
**dadurch gekennzeichnet,**
**dass** der anorganische Kleber zunächst in Pulverform vorliegt.

4. Verfahren nach einem der vorherigen Ansprüche,
**dadurch gekennzeichnet,**
**dass** der Einschmelzschlicker in einem Tauchprozess auf den Gegenstand aufgebracht wird, der einen oder mehrere Tauchschritte aufweist.

5. Verfahren nach einem der vorherigen Ansprüche,
**dadurch gekennzeichnet,**
**dass** der Einschmelzschlicker in einem Streich- oder Spritzprozess auf den Gegenstand aufgebracht wird.

6. Verfahren nach einem der vorherigen Ansprüche,
**dadurch gekennzeichnet,**
**dass** der Einschmelzschlicker in einer Stärke von mehr als 0,5 mm auf den Gegenstand aufgebracht wird.

7. Verfahren nach einem der vorherigen Ansprüche,
**dadurch gekennzeichnet,**
**dass** der Einschmelzschlicker bei einer Temperatur unterhalb 100°C, insbesondere bei Raumtemperatur auf den Gegenstand aufgebracht wird.

8. Verfahren nach einem der vorherigen Ansprüche,
**dadurch gekennzeichnet,**
**dass** zur Beschichtung eine Zusammensetzung vewendet wird, umfassend eine als Pulver vorliegende Einschmelzlegierung und ein Bindemittel, das an der Gesamtmasse einen Anteil von mehr als 5%, insbesondere von mehr als 10%, und maximal 50% ausmacht.

9. Verfahren nach Anspruch 8,
**dadurch gekennzeichnet,**
**dass** das Bindemittel eine mit der Einschmelzlegierung gut mischbare Substanz mit folgenden Eigenschaften ist:
sie bindet die Partikel der Einschmelzlegierung untereinander und an die Oberfläche eines Gegenstandes während der Auftragung und bis zu Temperaturen, bei denen die Einschmelzlegierung eine stabile Schicht bildet;
sie ist bei Temperaturen bis zu 400°C, insbesondere bis zu mindestens 500°C, stabil;
sie beeinflusst die Kristallstruktur der letztendlich eingeschmolzenen Einschmelzlegierung nicht signifikant.

10. Verfahren nach Anspruch 8,
**dadurch gekennzeichnet,**
**dass** das Bindemittel ein anorganischer Klebstoff ist, der bis über 500°C temperaturbeständig ist.

11. Verfahren nach einem der Ansprüche 8 bis 10,
**dadurch gekennzeichnet,**
**dass** die Zusammensetzung mit Flüssigkeit vermischt im wesentlichen eine Suspension bildet.

12. Gegenstand, beschichtet mit dem Verfahren nach einem der vorherigen Ansprüche.

## Claims

1. Method for coating of articles with a fusible metal composition,
wherein the fusible metal composition is present as a NiCrBSi-powder and is provided with a binder and is mixed with a liquid to a liquid or pasty fusible metal composition,
wherein the binder has a temperature stability of more than 400°C,
wherein the fusible metal composition is applied on to the article and the article, supplied with the fusible metal composition, is exposed to a temperature in the melting range of the fusible metal composition of more than 1000°C, so that the fusible metal composition is melted down,
**characterized in**
**that** an enamel powder or an inorganic glue is used as the binder.

2. Method according to claim 1,
**characterized in**
**that** water is used as the liquid.

3. Method according to one of the preceding claims,
**characterized in**
**that** the inorganic glue is initially present in powder form.

4. Method according to one of the preceding claims,
**characterized in**
**that** the fusible metal composition is applied on to the article by an immersion process comprising one or more immersion steps.

5. Method according to one of the preceding claims,
**characterized in,**
**that** fusible metal composition is applied on to the article by a smearing or spraying process.

6. Method according to one of the preceding claims,
**characterized in,**
**that** the fusible metal composition is applied on to the article with a thickness of more than 0,5mm.

7. Method according to one of the preceding claims,
**characterized in,**
**that** the fusible metal composition is applied on to the article at a temperature less than 100°C, in particular at room temperature.

8. Method according to one of the preceding claims,
**characterized in,**
**that** for coating a composition is used, comprising a fusible metal composition present as a powder and a binder, which represent more that 5%, in particular more that 10% and maximum 50% of the total mass.

9. Method according to claim 8,
**characterized in,**
**that** the binder is a substance which is good-mixable with the fusible metal composition having the following characteristics:
it binds the particle of the fusible metal composition with each other and on the surface of an article during applying and up to a temperature, at which the fusible metal composition constitutes a stable coating;
it is stable at temperatures up to 400°C, in particular up to at least 500°C;
it does not influences in a significant manner the crystal structure of the fusible metal composition, which is finally melted down.

10. Method according to claim 8,
**characterized in,**
**that** the binder is an inorganic glue, which has a temperature stability up to more than 500°C.

11. Method according to one of claims 8 to 10,
**characterized in,**
**that** the composition mixed with liquid essentially forms a suspension.

12. Article, coated with the method according to one of the preceding claims.

## Revendications

1. Procédé destiné à revêtir des objets d'un alliage métallique fusible,
lors duquel l'alliage fusible se présente sous la forme d'une poudre NiCrBSi et on l'ajoute à un agent liant et on le mélange avec un liquide pour obtenir une barbotine fusible liquide ou pâteuse,
l'agent liant faisant preuve d'une résistance thermique de plus de 400°C,
lors duquel on applique la barbotine fusible sur l'objet et on expose l'objet muni de la barbotine fusible à une température se situant dans la zone de fusion de l'alliage fusible, supérieure à 1000°C, de sorte que l'alliage fusible fonde,
**caractérisé en ce qu'**on utilise en tant qu'agent liant une poudre d'émail ou un agent adhésif anorganique.

2. Procédé selon la revendication 1, **caractérisé en ce qu'**on utilise de l'eau en tant que liquide.

3. Procédé selon l'une quelconque des revendications précédentes, **caractérisé en ce que** l'agent adhésif anorganique se présente d'abord sous forme de poudre.

4. Procédé selon l'une quelconque des revendications précédentes, **caractérisé en ce qu'**on applique la barbotine fusible sur l'objet dans un processus d'immersion qui comporte une ou plusieurs étapes d'immersion.

5. Procédé selon l'une quelconque des revendications précédentes, **caractérisé en ce qu'**on applique la barbotine fusible sur l'objet dans un processus de peinture ou de projection.

6. Procédé selon l'une quelconque des revendications précédentes, **caractérisé en ce qu'**on applique la barbotine fusible sur l'objet sur une épaisseur supérieure à 0,5 mm.

7. Procédé selon l'une quelconque des revendications précédentes, **caractérisé en ce qu'**on applique la barbotine fusible sur l'objet à une température inférieure à 100° C, notamment à température ambiante.

8. Procédé selon l'une quelconque des revendications précédentes, **caractérisé en ce que** pour le revêtement, on utilise une composition comprenant un alliage fusible se présentant sous la forme de poudre et un agent liant qui correspond à une part supérieure à 5 %, notamment supérieure à 10 % et à un maximum de 50 % de la masse totale.

9. Procédé selon la revendication 8, **caractérisé en ce que** l'agent liant est une substance bien miscible avec l'alliage fusible, avec les propriétés suivantes :
elle lie entre elles et sur la surface d'un objet les particules de l'alliage fusible pendant l'application et jusqu'à des températures auxquelles l'alliage fusible forme une couche stable ;
elle est stable jusqu'à des températures de jusqu'à 400° C, notamment de jusqu'à au moins 500° C ;
elle n'a aucune influence significative sur la structure cristalline de l'alliage fusible finalement fondu.

10. Procédé selon la revendication 8, **caractérisé en ce que** l'agent liant est un agent adhésif anorganique qui présente une résistance thermique jusqu'à plus de 500° C.

11. Procédé selon l'une quelconque des revendications 8 à 10, **caractérisé en ce que** la composition mélangée à du liquide forme sensiblement une suspension.

12. Objet, revêtu à l'aide du procédé selon l'une quelconque des revendications précédentes.
